# EUROPÄISCHE PATENTSCHRIFT

(11) **EP 2 721 316 B1**
(45) Veröffentlichungstag und Bekanntmachung des Hinweises auf die Patenterteilung: **02.03.2016**
(21) Anmeldenummer: 12723705.5
(22) Anmeldetag: 29.05.2012
(51) Int. Cl.: F16F 1/373, F16F 1/38

(54) **ANSCHLAGAUSFÜHRUNG DURCH EIN MONTAGETEIL**
STOP FORMATION BY A MOUNTING PART
RÉALISATION D'UNE BUTÉE PAR UN ÉLÉMENT DE MONTAGE

(30) Priorität: 15.06.2011 DE 102011051069
(43) Veröffentlichungstag der Anmeldung: 23.04.2014
(73) Patentinhaber: ContiTech Vibration Control GmbH, 30165 Hannover (DE)
(72) Erfinder: FIRLA, Andreas, 31535 Neustadt (DE)
(74) Vertreter: Finger, Karsten
(86) Internationale Anmeldenummer: PCT/EP2012/059940
(87) Internationale Veröffentlichungsnummer: WO 2012/171772

(56) Entgegenhaltungen:
- DE-A1- 2 755 117
- DE-A1-102009 041 549
- DE-A1-102009 044 093
- FR-A1- 2 769 962

## Beschreibung

Die Erfindung betrifft ein Lager für ein Kraftfahrzeug mit einem Innenteil, einem Außenteil, welches das Innenteil umfasst, einem Elastomerkörper, der das Innenteil und das Außenteil über wenigstens ein Federbein miteinander verbindet, welches im Wesentlichen unterhalb des Innenteils in Richtung der Gewichtskraft vorgesehen ist, und einem Einsteckhalter, der vorgesehen ist, von dem Innenteil zumindest teilweise aufgenommen zu werden.

Derartige Lager sind aus dem Stand der Technik bereits bekannt und werden in einem Kraftfahrzeug z. B. zur Lagerung des Motors verwendet. Üblicherweise ist das Außenteil z.B. zylindrisch oder hülsenartig ausgebildet und der Elastomerkörper weist wenigstens ein Federbein, vorzugsweise wenigstens zwei Federbeine auf, die das z.B. hülsenartige Innenteil mit dem Außenteil verbinden. Die Verwendung von zwei Federbeinen, auf den das Innenteil in der Richtung der Schwerkraft gelagert ist, hat den Vorteil, dass hierdurch eine bessere Quersteifigkeit erreicht werden kann als mit lediglich einem Federbein, welches als Druckpuffer arbeiten würde. Auch sind zwei im Wesentlichen auf Schub beanspruchte Federbeine vorteilhaft, um einen linearen Kraftlinienverlauf zu erzeugen.

Das Federbein ist bzw. die Federbeine sind im Wesentlichen unterhalb des Innenteils in Richtung der Gewichtskraft vorgesehen und damit im Wesentlichen in radialer Richtung des Innenteils und Außenteils, d.h. in der Ebene senkrecht zur Einschubrichtung (Längsachse) des Einsteckhalters. Andere geometrische Ausgestaltungen des Lagers sind jedoch ebenfalls möglich.

Das Innenteil enthält eine Einschuböffnung, in die ein Einsteckhalter in axialer Richtung des Lagers (Längsachse) eingeschoben wird. An dem Einsteckhalter kann z.B. der Motor eines Kraftfahrzeuges derart befestigt werden, dass bei einem in ein Kraftfahrzeug eingebauten Lager die Gewichtskraft des Motors senkrecht auf der Längsachse des Lagers steht, die in axialer Richtung des Außenteils verläuft. Der Motor des Kraftfahrzeuges ist dann durch die Federbeine des Elastomerkörpers in der radialen Richtung federnd gelagert.

Bei der Herstellung derartiger Lager ist formtechnisch in der Regel ein Spalt erforderlich, der durch die Schwindung des elastomeren Materials des Elastomerkörpers beim Abkühlprozess noch weiter vergrößert wird. Werden bei der Anwendung des Lagers im Kraftfahrzeug die Federbeine durch die Gewichtskraft der am Einsteckhalter montierten Fahrzeugbauteile in Richtung der Schwerkraft zusammengedrückt, so vergrößert sich der Luftspalt oberhalb des Innenteils gegenüber dem Außenteil in radialer Richtung, d.h. entgegen der Richtung der Schwerkraft, weiter. Dieser Luftspalt verringert jedoch die Lebensdauer des Elastomerkörpers und beeinflusst die Kraftwegkennlinie des Lagers.

Es hat sich gezeigt, dass die Lebensdauer des Elastomerkörpers und damit des gesamten Lagers deutlich erhöht werden kann, wenn der Elastomerkörper in radialer Richtung vorgespannt ist, so dass die tragenden Federbeine auf Druck belastet werden. Dies ist darauf zurückzuführen, dass durch die Vorspannung der radiale Federweg, den die Federbeine zulassen, zumindest in Zugrichtung begrenzt ist. Hierzu wird der Federweg, den die Federbeine zulassen, durch Anschläge im Elastomerkörper begrenzt.

Dies kann durch zusätzliche elastomere und bzw. oder thermoplastische und bzw. oder metallische Bauteile geschehen, die in den Luftspalt eingebracht werden, um hierdurch den Progressionsverlauf der Federbeine in Zugrichtung zu gestalten. So kann eine Vorspannung durch einen Anschlag erzeugt werden, der zwischen dem Innenteil und dem Außenteil des Lagers derart angeordnet ist, dass der Elastomerkörper des Lagers vorgespannt ist. Durch das Einbringen des Anschlages kann eine Vorspannung des Elastomerkörpers zuverlässig erreicht werden. Es ist jedoch festzustellen, dass das Einschieben des Anschlages einen zusätzlichen Arbeitsschritt darstellt, der die Herstellung des Lagers aufwendigerer und damit teurer macht.

In der DE 10 2009 044 093 A1 wird ein eingangs beschriebenes Lager offenbart, welches einen am Außenteil befindlichen Anschlagpuffer und dessen Einsteckhalter einen Anschlag aufweist. Wird nun der Einsteckhalter in axialer Richtung in das Innenteil geschoben, so drückt dessen Anschlag radial gegen den Anschlagpuffer des Außenteils und stellt hierdurch eine Vorspannung her. Hierdurch wird ein Herstellungsschritt eingespart, da das Einführen des Einsteckhalters samt Anschlag gemeinsam erfolgt.

Nachteilig ist hierbei, dass der Einsteckhalter und Anschlag einteilig aus dem gleichen Material wie z.B. Aluminiumguss ausgebildet sind, um hierdurch einen weiteren Herstellungsschritt zu sparen, der erforderlich wäre, diese Elemente getrennt herzustellen und danach zusammenzusetzen. Somit wird mittels der Anordnung der DE 10 2009 044 093 A1 eine sehr harte Vorspannung erreicht, da diese durch einen metallischen Einsteckhalter samt Anschlag bewirkt wird. Nachteilig ist auch, dass der Gesamtweg der Federbeine in Zugrichtung, der durch den Abstand der metallischen Bauteile bestimmt wird, reduziert wird und der Steifigkeitsanstieg sprunghaft erfolgt.

Die Aufgabe der vorliegenden Erfindung ist es, ein Lager der eingangs beschriebenen Art bereit zu stellen, welches einen größeren Spielraum bei der Einstellung der Vorspannung ermöglicht als bei den bekannten Lagern. Zumindest soll eine alternative Möglichkeit bereit gestellt werden, ein Lager der eingangs beschriebenen Art vorzuspannen und den Verlauf der Kraftwegkennlinie einzustellen bzw. zu beeinflussen.

Die Aufgabe wird erfindungsgemäß durch die Merkmale des kennzeichnenden Teils des Anspruchs 1 gelöst. Vorteilhafte Weiterbildungen sind in den Unteransprüchen beschrieben.

Somit betrifft die vorliegende Erfindung ein Lager gemäß dem Oberbegriff des Anspruchs 1, dessen Innenteil an einer Seite eine Aussparung aufweist, die zumindest bereichsweise mit einem elastomeren Material gefüllt ist, und dessen Einsteckhalter der Aussparung gegenüberliegend einen Anschlag aufweist, der vorgesehen ist, das elastomere Material der Aussparung gegen das Außenteil zu drücken.

Der Erfindung liegt die Erkenntnis zugrunde, in dem Innenteil des Lagers eine mit elastomerem Material gefüllte Aussparung vorzusehen und diese so zu gestalten, dass dieses elastomere Material durch den Anschlag des Einsteckhalters derart verformt wird, dass durch das Zusammenwirken von Anschlag, elastomerem Material und Außenteil des Lagers eine Vorspannung in radialer Richtung und damit ein gewünschter Progressionsverlauf in Zugrichtung des Lagers eingestellt wird.

Dabei ermöglicht es die Gestaltung des elastomeren Materials der Aussparung in Kombination mit der Ausgestaltung des Anschlags sowie der Innenseite des Außenteils, einen weich eingestellten Progressionsverlauf vorzusehen. So kann die Geometrie des Elastomerkörpers und des Anschlags vielseitig gestaltet werden, um den Progressionsverlauf zu beeinflussen. Insbesondere kommen hierbei die Breite der mit dem elastomeren Material gefüllten Aussparung sowie die Höhe des elastomeren Materials in diesem Bereich in Betracht. Auch können die Materialeigenschaften des elastomeren Materials der Aussparung zur Beeinflussung des Progressionsverlaufs herangezogen werden. Dies ist bei bekannten Lagern wie z.B. der DE 10 2009 044 093 A1 nicht in dieser Art möglich, da dort ein metallischer Anschlag verwendet wird.

Somit können erfindungsgemäß Lebensdauerprobleme eines eingangs beschriebenen Lagers durch eine entsprechende Wegbegrenzung in Zugrichtung des Elastomerkörpers und durch eine weiche Gestaltung des Progressionsverlaufs vermieden werden.

Gleichzeitig werden erfindungsgemäß die gleichen Herstellungsschritte wie bei der DE 10 2009 044 093 A1 eingespart, da der Anschlag und Einsteckhalter auch gemeinsam in einem Arbeitsschritt eingeführt werden.

Gemäß einem Aspekt der Erfindung sind der Einsteckhalter und der Anschlag einteilig ausgebildet. Unter einteilig ist zu verstehen, dass der Einsteckhalter als Ganzes, d.h. wenigstens Halteelement, Sockel und Anschlag, aus einem Stück, d.h. massiv und ohne Fügekanten, gefertigt ist. Vorteil ist dabei, dass ein weiterer Herstellungsschritt des Zusammensetzens von Einsteckhalter und Anschlag vor dem Einführen in das Innenteil eingespart werden kann.

Gemäß einem weiteren Aspekt der Erfindung ist der Anschlag als zungenförmiger Vorsprung ausgebildet. Unter zungenförmig ist zu verstehen, dass der Anschlag im Wesentlichen in der Längsachse des Einsteckhalters bzw. des Innenteils verlaufend ausgebildet ist und im vorderen Bereich in der Einführrichtung abgeflacht ist. Hierdurch verjüngt sich der Anschlag in der Einführrichtung, wodurch das Einführen des Einsteckhalters unter das elastomere Material der Aussparung erleichtert wird.

Gemäß einem Aspekt der Erfindung ist das Federbein relativ zu dem elastomeren Material und dem Anschlag einander im Wesentlichen radial gegenüberliegend vorgesehen. Sind zwei Federbeine vorhanden, so sind diese relativ zu dem elastomeren Material und dem Anschlag einander im Wesentlichen radial gegenüberliegend vorgesehen. Hierdurch wird eine Vorspannung in der Richtung der Gewichtskraft zwischen der unteren und oberen Innenseite des Außenteils erreicht.

Gemäß einem weiteren Aspekt der vorliegenden Erfindung weist das elastomere Material der Aussparung und das das elastomere Material der Aussparung umgebende elastomere Material eine unterschiedliche Shore-Härte auf. Dies kann z.B. durch unterschiedliche Elastomere oder auch durch eine Kombination aus Kunststoff wie z.B. Polyamid und Elastomer wie z.B. Kautschuk realisiert werden. Vorteilhaft ist dabei, dass das Dämpfungsverhalten des Lagers auf diese Weise vielseitig eingestellt werden kann. So kann das elastomere Material der Aussparung andere Eigenschaften aufweisen als das übrige, das Innenteil umgebende elastomere Material und auch als das Material des Federbeins bzw. der Federbeine. Hierdurch wird eine große Freiheit bei der Einstellung der Kraftwegkennline geschaffen, um das Lager verschiedensten Anforderungen optimal anpassen zu können.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines Lagers ohne Einsteckhalter,
- Fig. 2: eine perspektivische schematische Darstellung eines Innenteils eines Lagers ohne Einsteckhalter,
- Fig. 3: eine perspektivische schematische Darstellung eines Einsteckhalters,
- Fig. 4: eine perspektivische schematische Darstellung eines Innenteils eines Lagers mit eingeführtem Einsteckhalter,
- Fig. 5: eine perspektivische schematische Darstellung eines Lagers mit eingeführtem Einsteckhalter,
- Fig. 6: eine Schnittansicht eines Lagers ohne Einsteckhalter,
- Fig. 7: eine Schnittansicht eines Einsteckhalters, und
- Fig. 8: eine Schnittansicht eines Lagers mit eingeführtem Einsteckhalter.

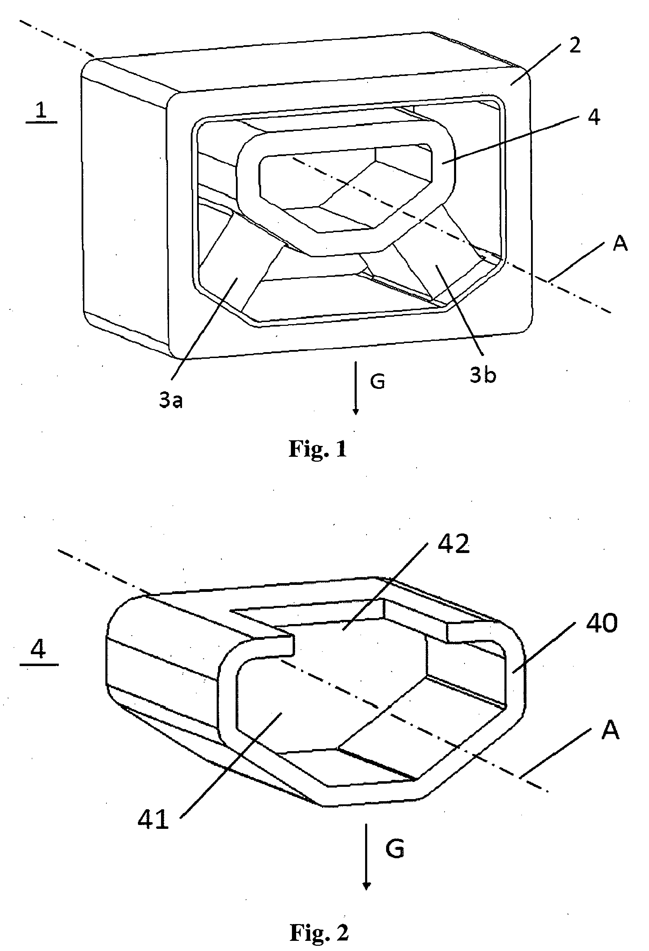

Fig. 1 zeigt eine perspektivische schematische Darstellung eines Lagers 1 ohne Einsteckhalter 5. Das Lager 1 weist ein Außenteil 2 auf, welches ein Innenteil 4 umschließt. Beide Teile 2, 4 sind axial entlang der Längsachse A ausgerichtet und radial, d.h. in der Ebene senkrecht zur Längsachse A, zueinander beabstandet. Bei einem in einem Kraftfahrzeug eingesetzten Lager 1 ist die Längsachse A im Wesentlichen senkrecht zur Richtung der Gewichtskraft G ausgerichtet. Beide Teile 2, 4 weisen in diesem Ausführungsbeispiel eine sechseckige Kontur auf. Es können allerdings auch Innenteile 4 und Außenteile 2 mit zylindrischem, ovalen, rechteckigen oder anderen mehreckigen Konturen verwendet werden.

Zwischen dem Innenteil 4 und dem Außenteil 2 sind zwei Federbeine 3a, 3b vorgesehen, welche das Innenteil 4 und das Außenteil 2 federnd miteinander verbinden. Alternativ könnte auch lediglich ein Federbein 3a, 3b vorgesehen sein (nicht dargestellt), welches dann vorzugsweise direkt unterhalb des Innenteils 2 in der Richtung der Gewichtskraft G vorgesehen wäre. Die Federbeine 3a, 3b sind vorzugsweise aus einem elastomeren Material vorgesehen, wobei auch andere Arten der Federung möglich sind. Vorzugsweise wird das elastomere Material der Federbeine 3a, 3b als Kautschuk zwischen dem Innenteil 4 und dem Außenteil 2 vulkanisiert. Der übrige Bereich zwischen Innenteil 4 und Außenteil 2 ist in diesem Ausführungsbeispiel hohl, d.h. frei von Material, jedoch können auch weitere dämpfende Elemente oder andere Elemente zwischen Innenteil 4 und Außenteil 2 vorgesehen sein.

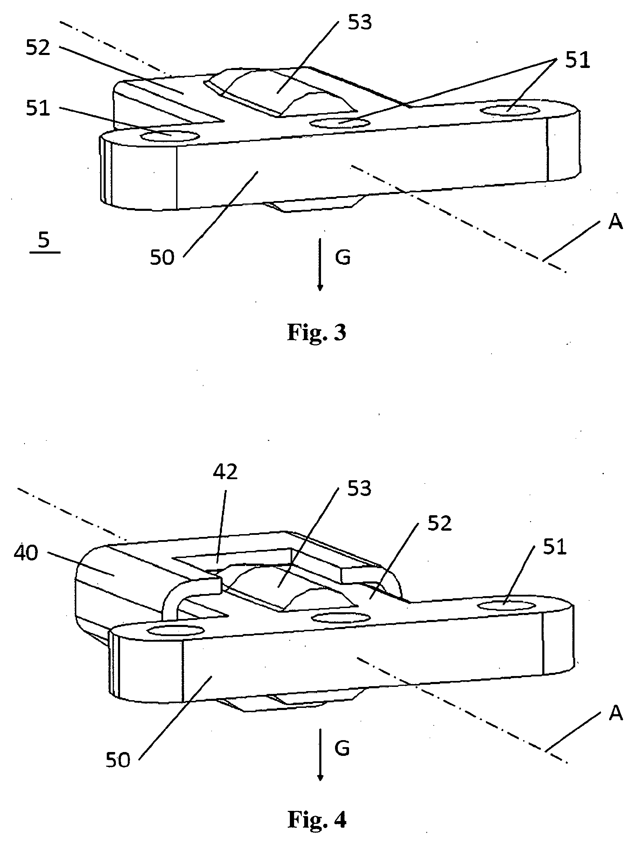

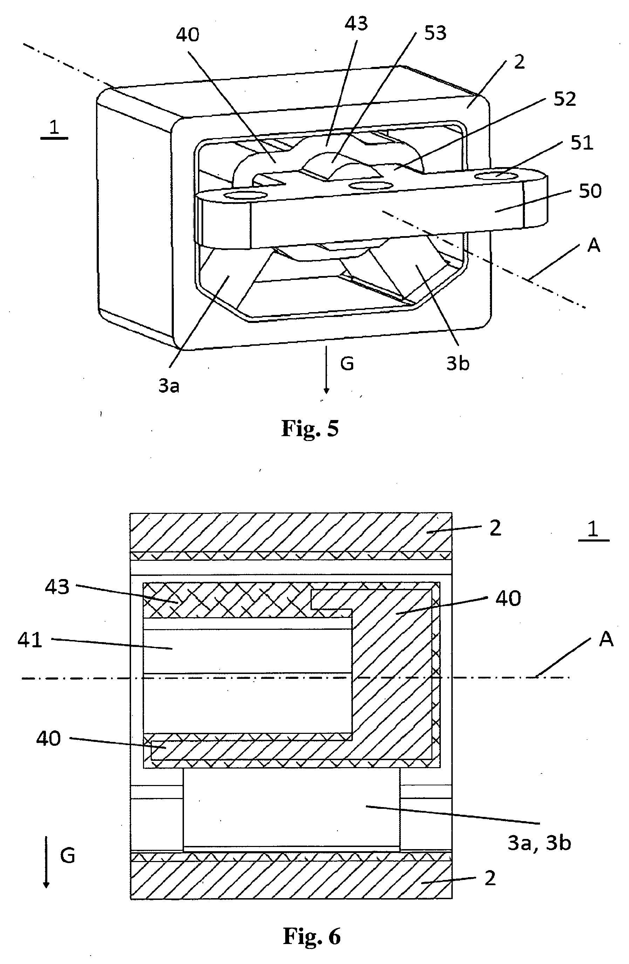

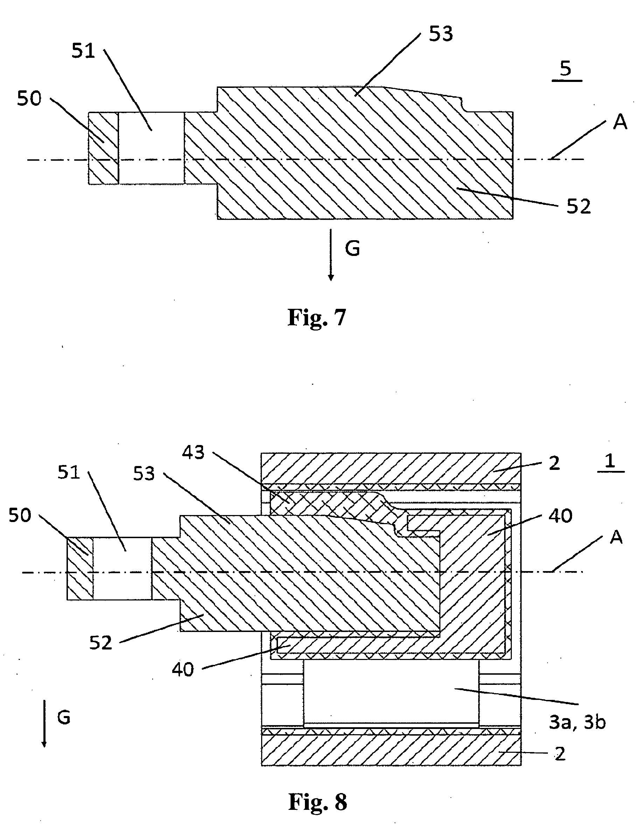

Fig. 2 zeigt eine perspektivische schematische Darstellung eines Innenteils 4 eines Lagers 1 ohne Einsteckhalter 5. Das Innenteil 4 weist einen hülsenartigen Innenkörper 40 auf, der eine Einstecköffnung 41 für einen Einsteckhalter 5 (siehe z.B. Fig. 3) aufweist, die in Längsachse A verläuft. Auf seiner oberen Seite, d.h. der der Gewichtskraft G entgegen gesetzten Seite, weist der hülsenartige Innenkörper 40 eine Aussparung 42 auf, die seitlich (in der Ebene senkrecht zur Gewichtskraft G) und in der Tiefe (in der Richtung der Längsachse A) wenigstens so groß ausgestaltet ist wie der Anschlag 53 eines in die Einstecköffnung 41 eingeführten Einsteckhalters 5 (siehe z.B. Fig. 4). Die Aussparung 42 wird erfindungsgemäß mit einem elastomeren Material 43 gefüllt (siehe z.B. Fig. 5, 6 und 8), welches zusammen mit dem Anschlag 53 des eingeführten Einsteckhalters 5 eine Vorspannung gegenüber der Innenseite des Außenteils 2 erzeugt (siehe z.B. Fig. 5 und 8).

Fig. 3 zeigt eine perspektivische schematische Darstellung eines Einsteckhalters 5. Der Einsteckhalter 5 weist ein Haltelement 50 mit Durchgangsbohrungen 51 auf. Die Durchgangsbohrungen 51 verlaufen im Wesentlichen senkrecht zur Längsachse A bzw. in Richtung der Gewichtskraft G und werden im eingebauten Zustand des Lagers 1 dazu verwendet, eine Last wie z.B. ein Getriebe oder einen Motor eines Kraftfahrzeugs am Lager 1 zu befestigen. Der Einsteckhalter 5 weist ferner einen Sockel 52 auf, auf dessen oberer Seite, d.h. der der Gewichtskraft G entgegen gesetzten Seite, ein Anschlag 53 vorgesehen ist, der höchstens so groß ausgestaltet ist wie die Aussparung 42 (siehe z.B. Fig. 2). Haltelement 50, Sockel 52 und Anschlag 53 sind dabei einteilig ausgebildet (siehe z.B. auch Fig. 7 und 8).

Vorzugsweise verläuft der Anschlag 53 in Längsachse A und weist einen in der Einführrichtung (Längsachse A) abgeflachten, vorderen Bereich auf, um das Einführen des Einsteckhalters 5 in die Einstecköffnung 41 des Innenteils 4 dadurch zu erleichtern, dass der abgeflachte, vordere Bereich des Anschlags 53 unter das elastomere Material 43 der Aussparung 42 greift und dieses beim Einführen anhebt, d.h. entgegen gesetzt der Richtung der Schwerkraft G. Mit anderen Worten ist der Anschlag 53 als zungenförmiger Vorsprung ausgebildet. Durch diese Abflachung ist sichergesellt, dass der Anschlag 53 nicht gegen das elastomere Material 43 gegen stößt, d.h. beim Einführen nicht mit diesem kollidiert, wodurch das Einführen zumindest behindert und verzögert werden würde. Somit kann eine zeitliche Verzögerung bei der Montage von Einsteckhalter 5 und Innenteil 4 vermieden werden.

Fig. 4 zeigt eine perspektivische schematische Darstellung eines Innenteils 4 eines Lagers 1 mit eingeführtem Einsteckhalter 5. Der Einsteckhalter 5 ist dabei entlang der gemeinsamen Längsachse A in die Einstecköffnung 41 des Innenteils 4 eingeführt worden. Hierdurch werden der Sockel 52 mit Anschlag 53 weitestgehend von dem hülsenartigen Innenkörper 40 derart umschlossen, dass der Anschlag 53 in der Aussparung 42 positioniert ist. Dabei zeigt Fig. 4 diese Konstellation ohne das elastische Material 43 in der Aussparung 42, um die Lage und Ausgestaltung von Anschlag 53 und Aussparung 42 zu verdeutlichen.

Fig. 5 zeigt eine perspektivische schematische Darstellung eines Lagers 1 mit eingeführtem Einsteckhalter 5. Wie bereits in Bezug zu Fig. 4 beschrieben, ist der Anschlag 53 im eingeführten Zustand in der Aussparung 42 positioniert. Ist nun erfindungsgemäß die Aussparung 42 mit dem elastomeren Material 43 gefüllt, so wird das elastomere Material 43 durch den eingeführten Anschlag 53 von unten, d.h. entgegen der Richtung der Gewichtskraft G, gegen die Innenseite des Außenteils 2 gedrückt. Hierdurch wird eine Vorspannung erreicht, dessen Progressionsverlauf sich durch die Dimensionierung von Aussparung 42 und Anschlag 53 sowie die Materialeigenschaften des elastomeren Materials 43 einstellen bzw. zumindest beeinflussen lässt.

Fig. 6 zeigt eine Schnittansicht eines Lagers 1 ohne Einsteckhalter 5. Das Innenteil 4 wird auf den beiden Federbeinen 3a, 3b auf dem Außenteil 2 federn gelagert. Das Innenteil 4 weist die Einstecköffnung 41 in Richtung der Längsachse A auf. Das Innenteil 41 ist in dieser Ansicht becherförmig ausgestaltet, d.h. der hülsenartige Innenkörper 40 weist im rechten Bereich der Fig. 6 einen Boden in der Ebene senkrecht zur Längsachse A auf, an dem der Sockel 52 des Einsteckhalters 5 im eingeführten Zustand anliegt. Der hülsenartige Innenkörper 40 ist in diesem Ausführungsbeispiel nahezu vollständig von einer elastomeren Schicht überzogen, die im Bereich der Aussparung 42 (vgl. z.B. Fig. 2 und 4) als elastomeres Material 43 derart ausgebildet ist, dass das elastomere Material 43 die Aussparung 42 in der Höhe (Achse der Gewichtskraft G) wenigstens vollständig ausfüllt. Es ist jedoch auch möglich, dass elastomere Material 43 der Aussparung 42 mit einer geringeren Höhe oder Dicke als den hülsenartigen Innenkörper 40 vorzusehen oder mit einer größeren Höhe oder Dicke, um hierdurch die Vorspannung bzw. den Progressionsverlauf zu beeinflussen.

Fig. 7 zeigt eine Schnittansicht eines Einsteckhalters 5. Die Elemente des Einsteckhalters 5 der Fig. 7 entsprechen denen der Darstellung der Fig. 3.

Fig. 8 zeigt eine Schnittansicht eines Lagers 1 mit eingeführtem Einsteckhalter 5. Auf seiner Unterseite, d.h. seiner horizontalen Ebene in Richtung der Schwerkraft G, liegt der Einsteckhalter 5 mit dem Sockel 52 auf der mit elastomerem Material überzogenen unteren Innenbereich des hülsenartigen Innenkörpers 40 auf. Im rechten Bereich der Fig. 8 liegt der Sockel 52 gegen den Boden des hülsenartigen Innenkörpers 40 an. Im Vergleich zur Darstellung des Fig. 6 ist der Bereich des elastomeren Materials 43 durch den Anschlag 53 des eingeführten Einsteckhalters 5 nach oben, d.h. entgegen der Richtung der Gewichtskraft G, gegen die Innenseite des Außenteils 2 gedrückt, wodurch sich erfindungsgemäß die gewünschte Vorspannung einstellen lässt.

### Bezugszeichenliste

### (Teil der Beschreibung)

- 1: Lager
- 2: Außenteil bzw.
- 3a: erstes Federbein
- 3b: zweites Federbein
- 4: Innenteil bzw.
- 40: hülsenartiger Innenkörper
- 41: Einstecköffnung für Einsteckhalter 50
- 42: Aussparung für elastomeres Material 43
- 43: Elastomeres Material in Aussparung 42
- 5: Einsteckhalter
- 50: Halteelement
- 51: Durchgangsbohrungen
- 52: Sockel
- 53: Anschlag
- A: Längsachse
- G: Richtung der Gewichtskraft

## Patentansprüche

1. Lager (1) für ein Kraftfahrzeug, mit
einem Innenteil (4),
einem Außenteil (2), welches das Innenteil (4) umfasst,
einem Elastomerkörper, der das Innenteil (4) und das Außenteil (2) über wenigstens ein Federbein (3a, 3b) miteinander verbindet, welches im Wesentlichen unterhalb des Innenteils (4) in Richtung der Gewichtskraft (G) vorgesehen ist, und
einem Einsteckhalter (5), der vorgesehen ist, von dem Innenteil (4) zumindest teilweise aufgenommen zu werden,
**dadurch gekennzeichnet, dass**
das Innenteil (4) an einer Seite eine Aussparung (42) aufweist, die zumindest bereichsweise mit einem elastomeren Material (43) gefüllt ist, und dass
der Einsteckhalter (5) der Aussparung (42) gegenüberliegend einen Anschlag (53) aufweist, der vorgesehen ist, das elastomere Material (43) der Aussparung (42) gegen das Außenteil (2) zu drücken.

2. Lager (1) nach Anspruch 1,
wobei der Einsteckhalter (5) und der Anschlag (53) einteilig ausgebildet sind.

3. Lager (1) nach Anspruch 1 oder 2,
wobei der Anschlag (53) als zungenförmiger Vorsprung ausgebildet ist.

4. Lager (1) nach einem der vorherigen Ansprüche,
wobei das Federbein (3a, 3b) relativ zu dem elastomeren Material (43) und dem Anschlag (53) einander im Wesentlichen radial gegenüberliegend vorgesehen ist.

5. Lager (1) nach einem der vorherigen Ansprüche,
wobei das elastomere Material (43) der Aussparung (42) und das das elastomere Material (43) der Aussparung (42) umgebende elastomere Material eine unterschiedliche Shore-Härte aufweisen.

## Claims

1. Bearing (1) for a motor vehicle, having
an inner part (4),
an outer part (2) which surrounds the inner part (4),
an elastomer body which connects the inner part (4) and the outer part (2) together via at least one spring strut (3a, 3b) which is provided substantially below the inner part (4) in the direction of the weight force (G), and
a plug-in holder (5) which is provided to be received at least partially by the inner part (4),
**characterized in that**
the inner part (4) has on one side a cutout (42) which is filled at least regionally with an elastomer material (43), and **in that**
the plug-in holder (5) has a stop (53) opposite the cutout (42), said stop (53) being provided to press the elastomer material (43) of the cutout (42) against the outer part (2).

2. Bearing (1) according to Claim 1,
wherein the plug-in holder (5) and the stop (53) are formed in one part.

3. Bearing (1) according to Claim 1 or 2,
wherein the stop (53) is in the form of a tongue-like protrusion.

4. Bearing (1) according to one of the preceding claims,
wherein the spring strut (3a, 3b) is provided in a mutually substantially radially opposite manner relative to the elastomer material (43) and the stop (53).

5. Bearing (1) according to one of the preceding claims,
wherein the elastomer material (43) of the cutout (42) and the elastomer material surrounding the elastomer material (43) of the cutout (42) have different Shore hardnesses.

## Revendications

1. Palier (1) pour un véhicule automobile, comprenant
une partie intérieure (4),
une partie extérieure (2) qui entoure la partie intérieure (4),
un corps en élastomère qui relie l'une à l'autre la partie intérieure (4) et la partie extérieure (2) par le biais d'au moins une jambe de ressort (3a, 3b), laquelle est prévue essentiellement en dessous de la partie intérieure (4) dans la direction de la force de pesanteur (G), et
un dispositif de fixation par enfichage (5) qui est prévu pour être reçu au moins en partie par la partie intérieure (4),
**caractérisé en ce que**
la partie intérieure (4) présente sur un côté un évidement (42) qui est au moins rempli dans certaines régions avec un matériau élastomère (43), et **en ce que** le dispositif de fixation par enfichage (5) présente en regard de l'évidement (42) une butée (53) qui est prévue pour presser le matériau élastomère (43) de l'évidement (42) contre la partie extérieure (2).

2. Palier (1) selon la revendication 1, dans lequel le dispositif de fixation par enfichage (5) et la butée (53) sont réalisés d'une seule pièce.

3. Palier (1) selon la revendication 1 ou 2, dans lequel la butée (53) est réalisée sous forme de saillie en forme de langue.

4. Palier (1) selon l'une quelconque des revendications précédentes, dans lequel la jambe de ressort (3a, 3b) est prévue par rapport au matériau élastomère (43) et à la butée (53) de manière essentiellement radialement opposée l'une à l'autre.

5. Palier (1) selon l'une quelconque des revendications précédentes, dans lequel le matériau élastomère (43) de l'évidement (42) et le matériau élastomère entourant le matériau élastomère (43) de l'évidement (42) présentent une dureté Shore différente.
